# EUROPÄISCHE PATENTANMELDUNG

(11) **EP 3 992 017 A1**
(43) Veröffentlichungstag der Anmeldung: **04.05.2022**
(21) Anmeldenummer: 21205582.6
(22) Anmeldetag: 29.10.2021
(51) Int. Cl.: B60L 53/14, B60L 53/30, B60L 53/35

(54) **VERFAHREN ZUM BETREIBEN EINES LADEROBOTERS**

(30) Priorität: 30.10.2020 DE 102020213701
(71) Anmelder: Continental Engineering Services GmbH, 60489 Frankfurt (DE)
(72) Erfinder: Schirra, Roman, 60488 Frankfurt am Main (DE)
(74) Vertreter: Continental Corporation

(57) **Zusammenfassung**

Verfahren zum Betreiben eines Laderoboters, wobei der Laderoboter eine Steckereinheit (1) aufweist, welche zumindest in im Wesentlichen horizontaler (x) und vertikaler (z) Richtung verfahrbar ist, wobei der Laderoboter eine Abdeckung (2) aufweist, durch welche die Steckereinheit (1) in einem ersten Verfahrzustand abgedeckt ist, wobei die Steckereinheit (1) und die Abdeckung (2) gemeinsam in horizontaler Richtung (x) mittels einer ersten Antriebseinheit (3) verfahren werden, wobei die Abdeckung (2) die Steckereinheit (1) abdeckt, zumindest bis ein zweiter Verfahrzustand erreicht ist,
wonach die Abdeckung (2) ausgehend von dem zweiten Verfahrzustand alleine in horizontaler Richtung (x) verfahren wird und die Steckereinheit (1) freigelegt wird bis ein dritter Verfahrzustand erreicht wird,
wonach die Steckereinheit (1) in vertikaler Richtung (z) verfahren wird, bis ein vierter Verfahrzustand erreicht ist.

## Beschreibung

Die Erfindung betrifft ein Verfahren zum Betreiben eines Laderoboters gemäß Oberbegriff von Anspruch 1 sowie einen Laderoboter.

Der Erfindung liegt die Aufgabe zu Grunde, ein Verfahren zum Betreiben eines Laderoboters sowie einen Laderoboter vorzuschlagen, welches robust und/oder zuverlässig und/oder relativ präzise und/oder kostengünstig eine Ladeverbindung zwischen Laderoboter und einem Fahrzeug ermöglicht.

Diese Aufgabe wird erfindungsgemäß gelöst gemäß dem Verfahren nach Anspruch 1 sowie dem Laderoboter gemäß Anspruch 14.

Unter dem Begriff Betreiben eines Laderoboters wird vorzugsweise das Betreiben hinsichtlich der elektrischen Kontaktierung bzw. das Positionieren einer Steckereinheit des Laderoboter hinsichtlich eines Fahrzeugs, zum Zweck des elektrischen Ladens verstanden.

Das Fahrzeug weist zweckmäßigerweise einen elektrischen Antrieb mit einer Batterie bzw. einem Akkumulator auf, welche/r insbesondere von dem Laderoboter geladen werden soll.

Unter einem Laderoboter wird vorzugsweise ein Gerät zum elektrischen Laden eines elektrischen Fahrzeugs, insbesondere Kraftfahrzeugs bzw. Personenkraftfahrzeugs oder Lastkraftfahrzeugs, verstanden, wobei der Laderoboter die elektrische Verbindung für einen Ladevorgang zwischen einer Steckereinheit des Laderoboters und einer Steckereinheit des Fahrzeugs herstellt. Dafür ist der Laderoboter zweckmäßigerweise so ausgebildet, dass er seine Steckereinheit gegenüber der Steckereinheit des Fahrzeugs für eine Kontaktierung ausrichten und/oder positionieren kann und besonders bevorzugt die Steckereinheit des Laderoboters mit gegenüber der Steckereinheit des Fahrzeugs in Eingriff gebracht und elektrisch leitend verbunden wird.

Der Laderoboter ist bevorzugt als Laderoboter für konduktives Laden ausgebildet.

Die Steckereinheit des Laderoboters umfasst vorzugsweise einen Stecker, welcher mit einem Fahrzeug bzw. dessen Ladebuchse verbindbar ist und zum elektrischen Laden des Fahrzeugs, zumindest dessen hauptsächlichen elektrischen Energiespeicher, ausgelegt ist.

Es ist zweckmäßig, dass der erste Verfahrzustand ein Ruhezustand des Laderoboters ist, in welchem die Steckereinheit von der Abdeckung abgedeckt ist und die Steckereinheit vollständig zurückgefahren bzw. unausgelenkt ist und der Laderoboter insbesondere weitgehend geschlossen ist.
Bevorzugt werden ausgehend vom ersten Verfahrzustand die Steckereinheit in durch die Abdeckung abgedecktem Zustand, die Steckereinheit und die Abdeckung gemeinsam in einer horizontalen Richtung befahren bzw. bewegt, bis ein zweiter Verfahrzustand erreicht ist, bei welchem die Steckereinheit und die Abdeckung gemeinsam in horizontaler Richtung ausgefahren bzw. ausgelenkt sind.

Zweckmäßigerweise wird ausgehend von dem zweiten Verfahrzustand die Steckereinheit freigelegt, durch alleiniges Verfahren der Abdeckung, wodurch ein dritter Verfahrzustand des Laderoboters erreicht wird.

Bevorzugt wird die Steckereinheit alleine in vertikaler Richtung ausgehend von dem dritten Verfahrzustand bis zu einem vierten Verfahrzustand ausgelenkt bzw. verfahren, insbesondere bis die Steckereinheit des Laderoboters einer Steckereinheit eines Fahrzeugs gegenüberliegend positioniert ist und/oder bis die Steckereinheit des Laderoboters mit der Steckereinheit des Fahrzeugs in Eingriff gebracht ist.

Die Steckereinheit des Fahrzeugs umfasst vorzugsweise eine Ladebuchse zur Aufnahme eines Steckers der Steckereinheit des Laderoboters.

Das Abdeckelement ist bevorzugt als Faltenbalgelement ausgebildet oder alternativ vorzugsweise ist das Abdeckelement in Form eines Rollos und/oder einer Rollbandabdeckung und/oder einer Gliederschürze ausgebildet, welches im Zuge des gemeinsamen Verfahrens von Steckereinheit und Abdeckung abgerollt bzw. entrollt wird um die sich zwischen erstem und zweitem Verfahrzustand darbietende Öffnung in der Außenwand des Laderoboters abzudecken, insbesondere abgedeckt zu halten.

Unter dem Verfahren von Bauteilen zwischen Verfahrzuständen bzw. von einem Verfahrzustand zu einem anderen/ nächsten Verfahrzustand, wird vorzugsweise eine entsprechende Bewegung der Bauteile verstanden.

Der wenigstens eine Elektroantrieb weist bevorzugt eine Führungsschiene oder zwei Führungsschienen auf.

Zweckmäßigerweise weist die Abdeckung eine Dichtung bzw. Dichtlippe auf, insbesondere umlaufend, wobei alternativ vorzugsweise oder zusätzlich weist das Gehäuse des Laderoboters einen Wasserablauf auf.

Das Gehäuse und/oder die Abdeckung sind vorzugsweise aus Kunststoff ausgebildet, insbesondere einstückig.

Bevorzugt wird ausgehend von dem zweiten Verfahrzustand die Abdeckung alleine in horizontaler Richtung im Wesentlichen um die Länge der Steckereinheit verfahren.

Zweckmäßigerweise erfolgt ausgehend von dem zweiten Verfahrzustand das Verfahren der Abdeckung alleine in horizontaler Richtung mittels einer zweiten Antriebseinheit.

Es ist bevorzugt, dass die erste und/oder die zweite Antriebseinheit als Elektroantriebe ausgebildet sind.

Es ist zweckmäßig, dass der Laderoboter ein Gehäuse aufweist, welches in dem ersten Verfahrzustand durch die Abdeckung geschlossen ist, wobei die Steckereinheit ein verformbares Abdeckelement aufweist, welches im Zuge des gemeinsamen Verfahrens von Steckereinheit und Abdeckung den Freiraum zwischen Steckereinheit und Gehäuse im Wesentlichen abdeckt. Insbesondere ist das Abdeckelement dabei als Faltenbalgelement ausgebildet.

Es ist bevorzugt, dass der Laderoboter eingerichtet ist vom vierten Verfahrzustand zurück in den dritten Verfahrzustand zu fahren und anschließend oder separat ausgehend vom dritten Verfahrzustand in den zweiten Verfahrzustand und/oder anschließend oder separat ausgehend vom zweiten Verfahrzustand in den ersten Verfahrzustand.

Es ist zweckmäßig, dass die Abdeckung als geführter Schlitten ausgebildet ist, welcher eine Abdeckplatte bzw. Abdeckfläche aufweist, durch welche die Steckereinheit in einem ersten Verfahrzustand abgedeckt ist

Vorzugsweise ist der wenigstens eine Elektroantrieb als Linearelektroantrieb oder Elektroantrieb mit einem Zahnrad ausgebildet, wobei das Zahnrad oder der Linearelektroantrieb entlang einer linearen Führung verfahrbar ist und entlang dieser Führung die Steckereinheit und/oder die Abdeckung horizontal auslenken und/oder verfahren kann.

Es ist bevorzugt, dass das Verfahren der Steckereinheit und der Abdeckung vom ersten zum zweiten Verfahrzustand eine von dem Verfahren der Steckereinheit ausgehend von dem dritten zum vierten Verfahrzustand unabhängige und/oder getrennt Bewegungen/ Auslenkungen sind.

Es ist bevorzugt, dass zum Verfahren der Steckereinheit in vertikaler Richtung ausgehend von dem dritten Verfahrzustand zu dem vierten Verfahrzustand der Laderoboter eine zusätzliche, insbesondere dritte Antriebseinheit aufweist.

Vorzugsweise sind das Gehäuse und die Abdeckung so ausgebildet, insbesondere hinsichtlich der Materialauslegung und der Verstärkung und/oder Versteifung des Gehäuses und/oder der Abdeckung, dass ein Kraftfahrzeug zumindest mit einem Rad auf dem Laderoboter abgestellt werden kann, insbesondere im ersten Verfahrzustand.

Es ist bevorzugt, dass die Abdeckung hinsichtlich ihrer Abdeckfläche im Wesentlichen flächendeckend Verstrebungs- und/oder Versteifungselement aufweist.

### Bezugszeichen

- 1: Steckereinheit
- 2: Abdeckung
- 3: erste Antriebseinheit
- 4: zweite Antriebseinheit
- 5: Gehäuse
- 6: Abdeckelement
- 7: Führung der Abdeckung
- 8: Verstrebungs- und/oder Versteifungselement der Abdeckung
- 9: Abdeckfläche der Abdeckung
- 10: Stecker

- x: horizontale Richtung
- z: vertikale Richtung
- L: Länge der Steckereinheit

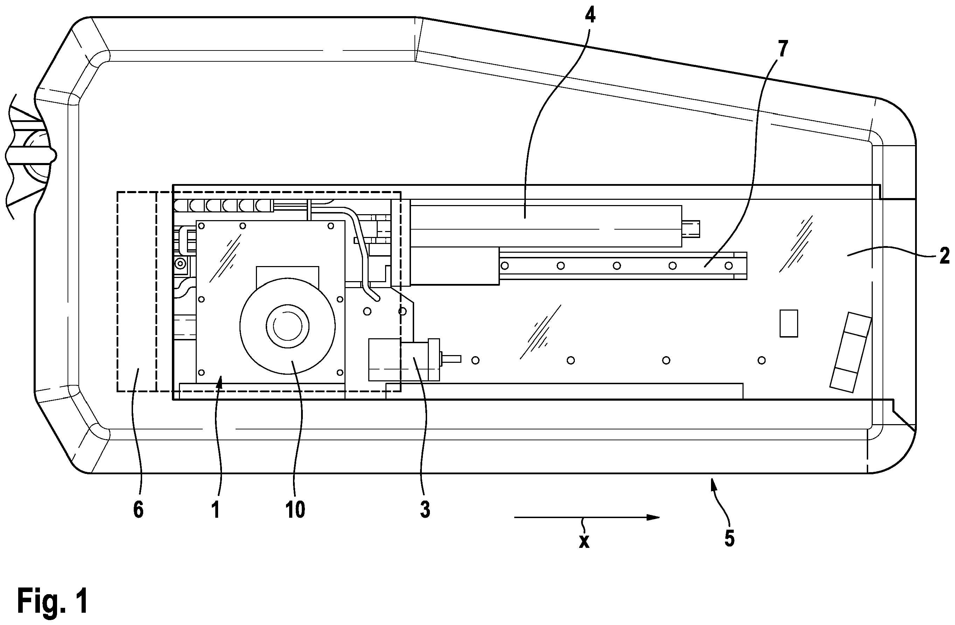

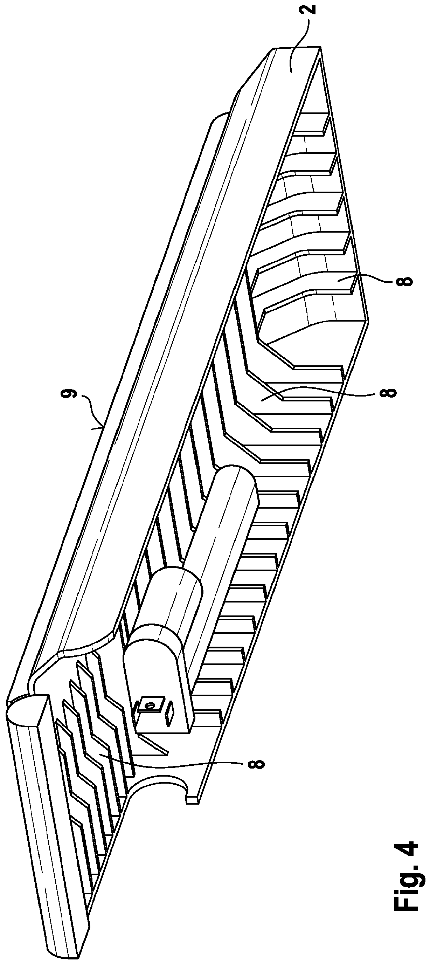

Figuren 1 bis 3 zeigen schematische Ausführungsbeispiele des Laderoboter anhand bestimmter Verfahrzustände und Fig. 4 zeigt schematisch eine beispielhafte Abdeckung.

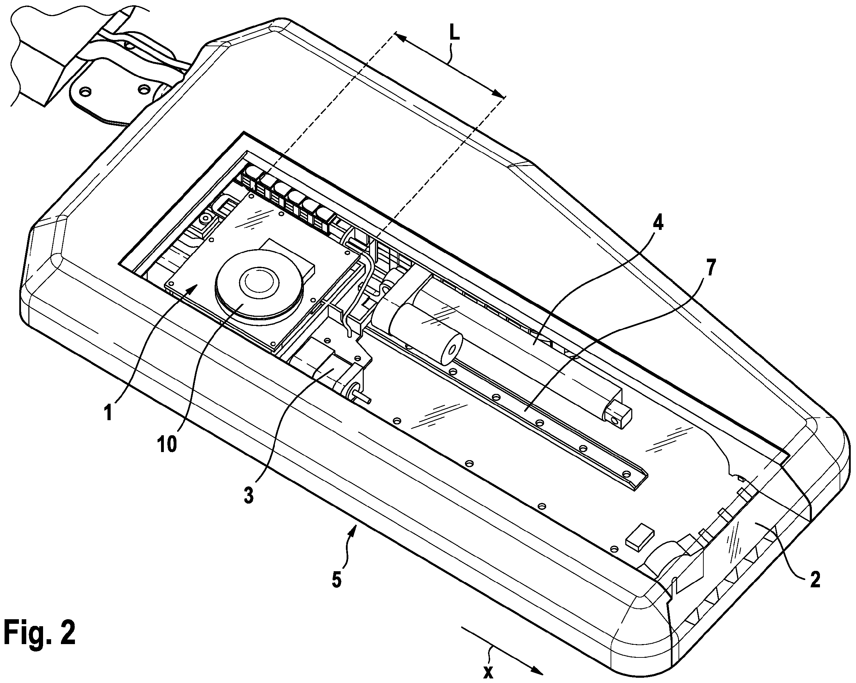

Anhand von Fig. 1 und aus anderer Perspektive mittels Fig. 2 ist bespielhaft der Laderoboter in seinem ersten Verfahrzustand veranschaulicht. Der Laderoboter weist ein Gehäuse 5 aus Kunststoff auf, eine Steckereinheit 1, die einen Stecker 10 umfasst, ein Abdeckelement 6, welches unter dem Gehäuse 5 angeordnet ist in dem ersten Verfahrzustand und mit der Steckereinheit 1 verbunden ist. Außerdem weist der Laderoboter eine Abdeckung 2 auf, welche in das Gehäuse 5 eingepasst und im Gehäuse geführt wird. Abdeckung ist beispielhaft teil-transparent abgebildet, wodurch erste und zweite Antriebseinheit 3 und 4 sichtbar sind, welche jeweils beispielgemäß als Linearelektroantriebe ausgebildet sind. Erster Antrieb 3 treibt dabei Steckereinheit 1 und Abdeckung 2 gemeinsam an bzw. bewegt diese gemeinsam. Zweiter Antrieb 4 läuft beim Verfahren vom ersten zum zweiten Verfahrzustand mit bzw. wird mitgezogen, wobei zweiter Antrieb 4 die Abdeckung 2 ausgehend von dem zweiten Verfahrzustand alleine in horizontaler Richtung x verfährt, dabei geführt mittels Führung bzw. Führungsschiene 7, und die Steckereinheit 1 freigelegt wird bis ein dritter Verfahrzustand erreicht wird.

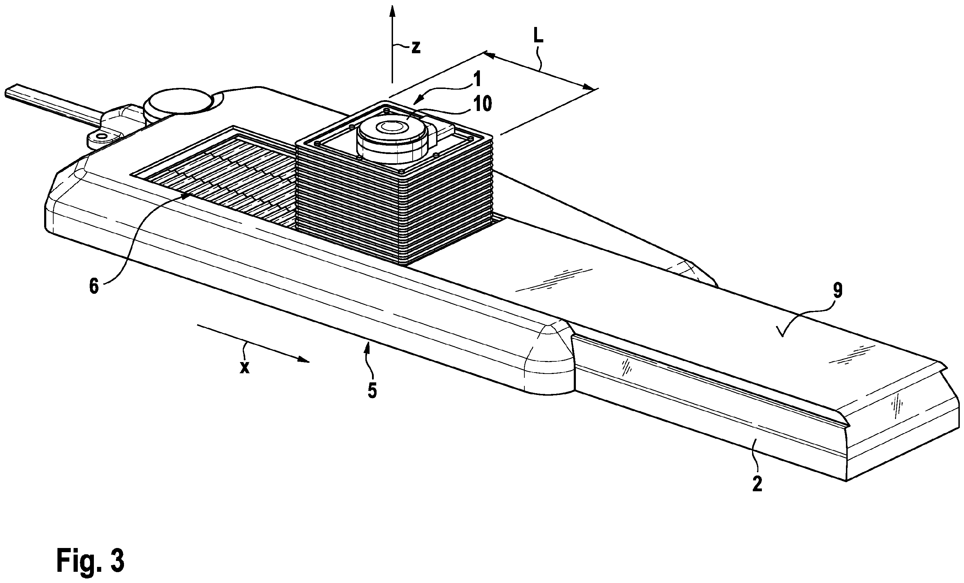

Fig. 3 zeigt beispielhaft einen Laderoboter im vierten Verfahrzustand. Ausgehend vom zweiten Verfahrzustand ist Steckereinheit 1, umfassend Stecker 10, abgedeckt, indem Abdeckung 2 um im Wesentlichen die Länge L der Steckereinheit 1 in horizontaler Richtung verfahren ist. Abdeckelement 6, beispielgemäß als Faltenbalgelement ausgebildet, deckt dabei die Lücke zwischen Steckereinheit 1 und Gehäuse 5 ab. Steckereinheit 1 ist dabei nun im vierten Verfahrzustand in vertikaler Richtung z nach oben verfahren um ein Einstecken des Steckers 10 in eine nicht dargestellte Ladebuchse eine Elektrofahrzeugs zu ermöglichen.

Anhand von Fig. 4 ist eine beispielhafte Abdeckung 2 veranschaulicht, welche eine Abdeckfläche 9 aufweist. Die Abdeckung 2 insbesondere hinsichtlich der Abdeckfläche 9 ist mittels Verstrebungs- und Versteifungselementen 8 verstärkt, so dass ein Kraftfahrzeug ohne Beschädigung des Laderoboters auf die Abdeckung fahren kann, zumindest im ersten Verfahrzustand.

## Patentansprüche

1. Verfahren zum Betreiben eines Laderoboters, wobei der Laderoboter eine Steckereinheit (1) aufweist, welche zumindest in im Wesentlichen horizontaler (x) und vertikaler (z) Richtung verfahrbar ist, wobei der Laderoboter eine Abdeckung (2) aufweist, durch welche die Steckereinheit (1) in einem ersten Verfahrzustand abgedeckt ist, **dadurch gekennzeichnet, dass**
die Steckereinheit (1) und die Abdeckung (2) gemeinsam in horizontaler Richtung (x) mittels einer ersten Antriebseinheit (3) verfahren werden, wobei die Abdeckung (2) die Steckereinheit (1) abdeckt, zumindest bis ein zweiter Verfahrzustand erreicht ist,
wonach die Abdeckung (2) ausgehend von dem zweiten Verfahrzustand alleine in horizontaler Richtung (x) verfahren wird und die Steckereinheit (1) freigelegt wird bis ein dritter Verfahrzustand erreicht wird,
wonach die Steckereinheit (1) in vertikaler Richtung (z) verfahren wird, bis ein vierter Verfahrzustand erreicht ist.

2. Verfahren nach Anspruch 1, **dadurch gekennzeichnet, dass** ausgehend von dem zweiten Verfahrzustand die Abdeckung (2) alleine in horizontaler Richtung (x) im Wesentlichen um die Länge (L) der Steckereinheit (1) verfahren wird.

3. Verfahren nach Anspruch 1 oder 2, **dadurch gekennzeichnet, dass** ausgehend von dem zweiten Verfahrzustand das Verfahren der Abdeckung (2) alleine in horizontaler Richtung (x) mittels einer zweiten Antriebseinheit (4) erfolgt.

4. Verfahren nach mindestens einem der vorhergehenden Ansprüche, **dadurch gekennzeichnet, dass** die erste und/oder die zweite Antriebseinheit (3, 4) als Elektroantriebe ausgebildet sind.

5. Verfahren nach mindestens einem der vorhergehenden Ansprüche, **dadurch gekennzeichnet, dass** der Laderoboter ein Gehäuse (5) aufweist, welches in dem ersten Verfahrzustand durch die Abdeckung (2) geschlossen ist, wobei die Steckereinheit (1) ein verformbares Abdeckelement (6) aufweist, welches im Zuge des gemeinsamen Verfahrens von Steckereinheit (1) und Abdeckung (2) den Freiraum zwischen Steckereinheit (1) und Gehäuse (5) im Wesentlichen abdeckt.

6. Verfahren nach Anspruch 5, **dadurch gekennzeichnet, dass** das Abdeckelement (6) als Faltenbalgelement ausgebildet ist.

7. Verfahren nach mindestens einem der vorhergehenden Ansprüche, **dadurch gekennzeichnet, dass** der Laderoboter eingerichtet ist vom vierten Verfahrzustand zurück in den dritten Verfahrzustand zu fahren und anschließend oder separat ausgehend vom dritten Verfahrzustand in den zweiten Verfahrzustand und/oder anschließend oder separat ausgehend vom zweiten Verfahrzustand in den ersten Verfahrzustand.

8. Verfahren nach mindestens einem der vorhergehenden Ansprüche, **dadurch gekennzeichnet, dass** die Abdeckung (2) als geführter Schlitten ausgebildet ist, welcher eine Abdeckplatte (9) aufweist, durch welche die Steckereinheit in einem ersten Verfahrzustand abgedeckt ist

9. Verfahren nach mindestens einem der vorhergehenden Ansprüche, **dadurch gekennzeichnet, dass** der wenigstens eine Elektroantrieb (3, 4) als Linearelektroantrieb oder Elektroantrieb mit einem Zahnrad ausgebildet ist, wobei das Zahnrad oder der Linearelektroantrieb entlang einer linearen Führung (7) verfahrbar ist und entlang dieser Führung die Steckereinheit (1) und/oder die Abdeckung (2) horizontal auslenken und/oder verfahren kann.

10. Verfahren nach mindestens einem der vorhergehenden Ansprüche, **dadurch gekennzeichnet, dass** das Verfahren der Steckereinheit (1) und der Abdeckung (2) vom ersten zum zweiten Verfahrzustand eine von dem Verfahren der Steckereinheit (1) ausgehend von dem dritten zum vierten Verfahrzustand unabhängige und/oder getrennt Bewegungen/ Auslenkungen sind.

11. Verfahren nach mindestens einem der vorhergehenden Ansprüche, **dadurch gekennzeichnet, dass** zum Verfahren der Steckereinheit (1) in vertikaler Richtung (z) ausgehend von dem dritten Verfahrzustand zu dem vierten Verfahrzustand der Laderoboter eine zusätzliche, insbesondere dritte Antriebseinheit aufweist.

12. Verfahren nach mindestens einem der vorhergehenden Ansprüche, **dadurch gekennzeichnet, dass**
das Gehäuse (5) und die Abdeckung (2) so ausgebildet sind, insbesondere hinsichtlich der Materialauslegung und der Verstärkung und/oder Versteifung des Gehäuses und/oder der Abdeckung, dass ein Kraftfahrzeug zumindest mit einem Rad auf dem Laderoboter abgestellt werden kann, insbesondere im ersten Verfahrzustand.

13. Verfahren nach mindestens einem der vorhergehenden Ansprüche, **dadurch gekennzeichnet, dass** die Abdeckung (2) hinsichtlich ihrer Abdeckfläche (9) im Wesentlichen flächendeckend Verstrebungs- und/oder Versteifungselement (8) aufweist.

14. Laderoboter, aufweisend ein Gehäuse, eine Steckereinheit, eine Abdeckung (2) sowie wenigstens eine Abtriebseinheit (3, 4), wobei der Laderoboter zum Ausführen des Verfahrens gemäß mindestens einem der vorhergehenden Ansprüche ausgebildet ist.
